Europäisches Patentamt

European Patent Office

Office européen des brevets

(19)

(11) Publication number: **0 193 502**
**B1**

# (12) EUROPEAN PATENT SPECIFICATION

(45) Date of publication of the patent specification:
07.02.90

(21) Application number: 86830047.6

(22) Date of filing: 24.02.86

(51) Int. Cl.⁴: **B60K 41/02**

(54) A servo friction-clutch device for automating the clutch operation in motor vehicles of any kind.

(30) Priority: 28.02.85 IT 4775085

(43) Date of publication of application:
03.09.86 Bulletin 86/36

(45) Publication of the grant of the patent:
07.02.90 Bulletin 90/6

(84) Designated Contracting States:
AT BE CH DE FR GB LI LU NL SE

(56) References cited:
EP-A- 0 097 594
DE-A- 3 216 244
FR-A- 2 525 163
US-A- 4 434 879

(73) Proprietor: Venturini, Stefano, Via Mattia Battistini 175,
I-00167 Rome(IT)

(72) Inventor: Venturini, Stefano, Via Mattia Battistini 175,
I-00167 Rome(IT)

(74) Representative: de Simone, Domenico et al, Ing.
Barzanò & Zanardo Roma S.p.A. Via Piemonte 26,
I-00187 Roma(IT)

## Description

The present invention relates to a servo friction-clutch device for automatic clutch operation in motor vehicles as described in the precharacterizing part of claim 1 or 2. Such a clutch device is known from EP-A 97 594 disclosing a device comprising a cylinder means having two chambers for a piston which is mechanically connected to the friction, a multiway valve operated by the accelerator and having a first inlet way connected to vacuum generating means, a second inlet way connected to the atmospheric pressure, and a first and second outlet way connected to one of said two chambers, the second chamber being at atmospheric pressure. The device comprises a valve, interposed between the first outlet way and the chamber, and is operated by the position of the piston. The seat of the valve is provided in an insert frictionally mounted in a guide.

The device which is the object of the present invention allows the driver to use engine breaking at any time, both when the vehicle is riding at a high speed and when it is at a stop, while providing a simple a reliable apparatus.

Moreover, the device according to the present invention allows the driver to proportion at his will the slipping of the friction clutch with respect to the load conditions of the vehicle and to the number of revolutions of the engine, by just actuating the gas pedal through short strokes.

This object and further objects of the present invention are obtained through the servo friction-clutch device as defined in independent claims 1 and 2.

According to the solution in claim 2 of the present invention, a very simple servo friction-clutch structure is advantageously obtained, as no two-chamber tight cylinder is necessary, even though both the embodiments disclosed herein allow the friction-clutch to be optimally actuated and in a way similar to that obtained through the driver's stepping on the friction-clutch pedal.

Employing the solution in claim 1 the friction-clutch operation is obtained by modulating or controlling the vacuum value.

According to a particularly preferred embodiment of the device of the present invention, said venting means comprises a seal or tight small piston cooperating with a venting outlet and connected on the other side to the carburetor of the vehicle.

Further according to the present invention, said venting means are operatively actuated through a mechanical coupling means with the throttle of said carburetor, said throttle being connected with small lever means which are in turn connected to said venting means through wire means.

Again according to the present invention, said venting means can be operatively actuated by the carburetor of the vehicle providing a membrane with a mobile small piston, said membrane being connected to said carburetor at an upper position with respect to the valve of the latter, through a small hole, so that the vacuum within said carburetor causes the displacement of said mobile small piston according to the opening of said valve, which small piston, being in turn connected to said venting means, causes the consequent displacement of the same.

The position at which said membrane means communicate through said small hole with said carburetor at an upper position with respect to the valve of the latter, is suggested by the fact that a constant vacuum valve which constantly changes with the opening of the valve is present in that zone, differently from what occurs at a lower position with respect to said valve, as many experiments have shown that in such zone the vacuum valve changes in a very irregular and unforeseeable way.

According to a preferred embodiment of the device of the present invention, said mechanical means for connecting said membrane means, and as a consequence, said shaft means, to the friction-clutch pedal or to its equivalent leverage, are made up of a connector and of a cord which can run within a sheathing and is connected to a ball-and-socket joint.

Again according to the present invention, said vacuum generating means can advantageously consist of the engine manifold of the vehicle, a check-valve or non-return valve being provided on the duct connecting said manifold with said solenoid valve means, said check-valve allowing the flow in the direction from the solenoid valve means to the manifold only.

Advantageously, a vacuum reservoir can be arranged as a bypass on said duct.

As already mentioned above, said venting means are advantageously connected direct or indirect to the friction-clutch pedal or to its equivalent leverage.

According to a first solution to the problem, said connection is obtained providing plate means between said shaft means and said mechanical means, and said venting means.

Further according to the present invention, the latter means can be connected to said shaft means through a shaft extension and shaped lever means, in particular according to the embodiment of the device of the present invention in which cylinder means are provided consisting of one only tight chamber.

As an alternative, said venting means can be provided direct on the friction-clutch pedal, or on its equivalent leverage, or at any other advantageous position, as on the other hand such particular choice is of no bearing as regards the good operation of the device of the present invention, but it is only a particular choice of a constructive kind.

Again according to the present invention, the commutation of said three-way solenoid valve means is actuated by an electric contact provided below the gas pedal of the motor vehicle, said contact being de-energized when the vehicle is riding at a certain number of revolutions per minute so that said frequency generator means start operating and the venting of said cylinder means occurs through said venting solenoid valve means consisting of the one-way solenoid valve.

Moreover, according to the present invention said frequency generator means are connected to the tachometer of the vehicle so as to cause the operation of said one-way venting solenoid valve means at a predetermined speed value only.

The present invention will be disclosed in the following for illustrative and not for limitative purposes with particular reference to some preferred embodiments of the same and with reference to their illustrations shown in the enclosed drawings, wherein:

Figure 1 is a schematic view of a first embodiment of the device according to the present invention;

Figures 1a and 1b show the accelerator or gas pedal of a motor vehicle respectively in the rest and the operative position;

Figure 1c shows schematically the frequency generator connected to the tachometer of the motor vehicle on which the device according to the present invention is provided;

Figure 2 shows a schematic view of a second embodiment of the device according to the present invention;

Figure 3 shows a schematic view of a third embodiment of the device according to the present invention;

Figure 4 shows a schematic view of the solenoid valve of the device according to the present invention, said valve being de-energized;

Figure 5 shows a schematic view of the solenoid valve of the device according to the present invention, said valve being energized;

Figure 6 shows a schematic view of the small venting piston of the device according to the present invention, in one kind of application; and

Figure 7 shows a schematic view of the small venting piston of the device according to the present invention, in a second kind of application.

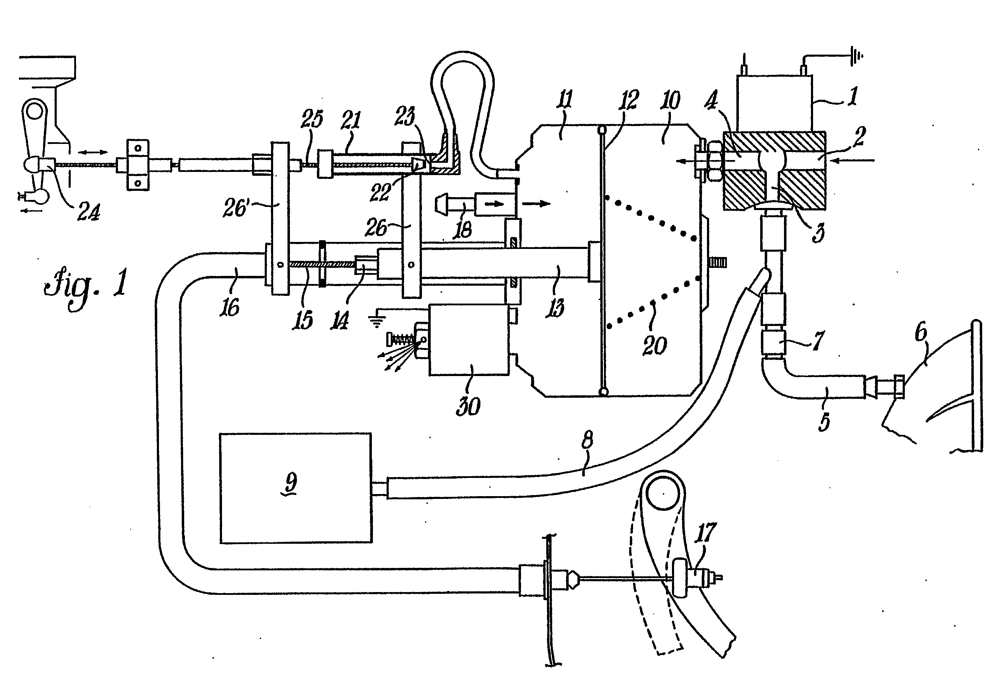

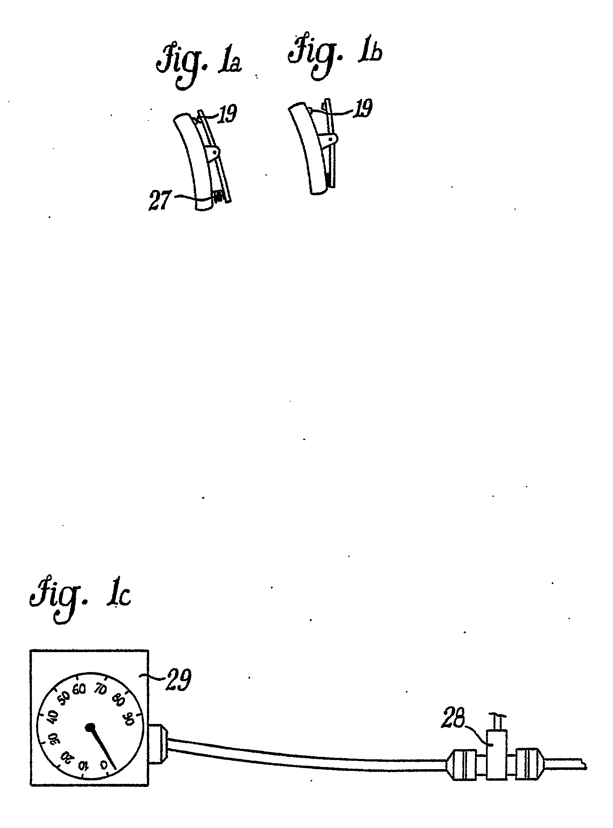

With reference now to the embodiment shown in Figure 1, a current is sent to the electric circuit of the servo friction-clutch after inserting and rotating the ignition lock key of the motor vehicle.

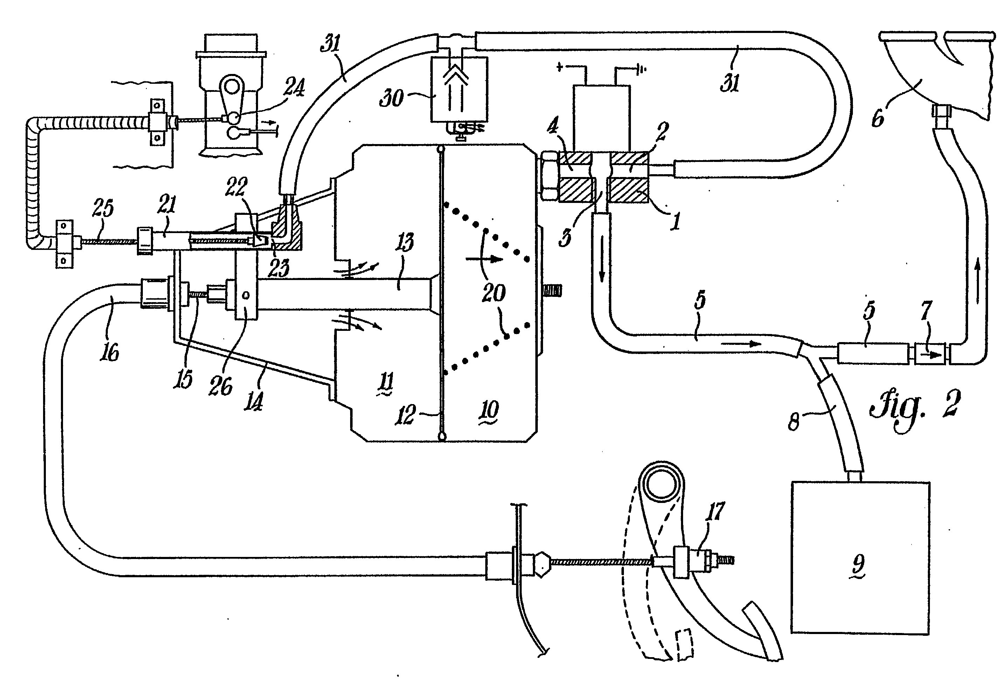

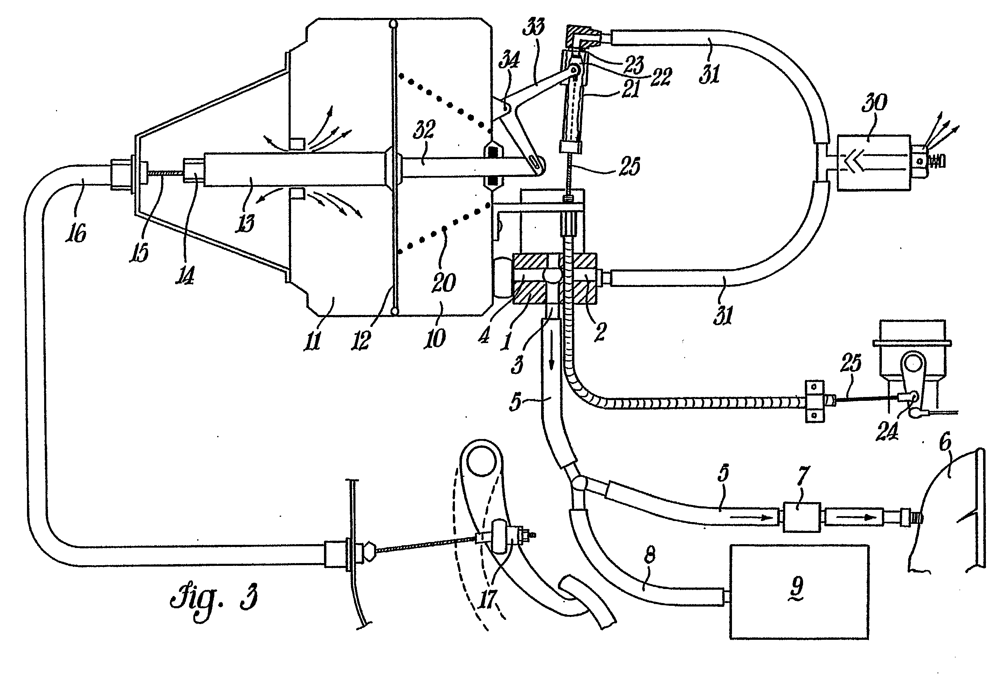

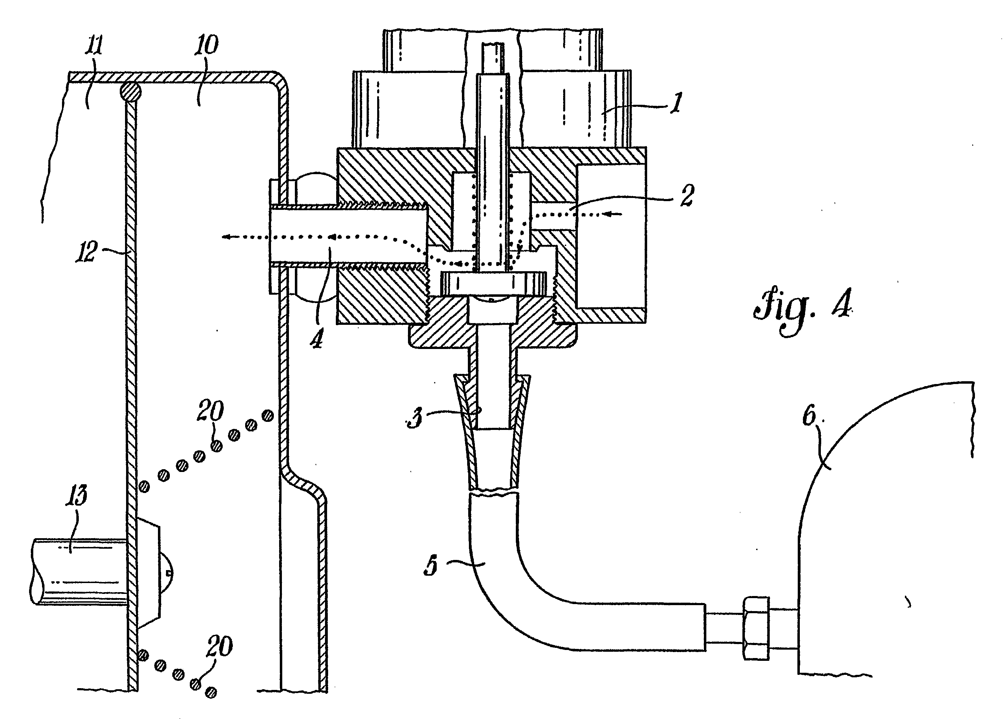

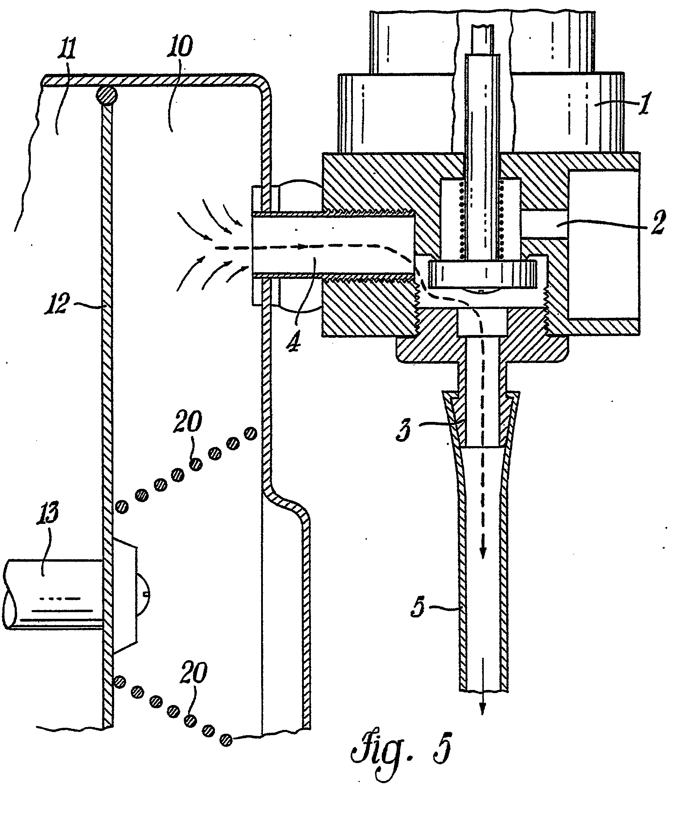

Said electric current, reaching the positive pole of the three-way solenoid valve 1, energizes the same causing it to commute from the position shown in Figure 4, wherein the atmospheric pressure flows in through the channel 2 and reaches said servo friction-clutch to the position shown in Figure 5 wherein the communication of the servo friction-clutch connected to the channel 4 of said solenoid valve 1 is established through the channel 3 with the vacuum.

Indeed, the solenoid valve 1 is connected to a vacuum circuit consisting of the pipe 5 that is connected on one side to said channel 3 of the solenoid valve and on the other side to the vacuum source 6 which may also be made up of the manifold itself of the motor vehicle engine. A check-valve 7 is provided on said pipe 5, such check valve allowing the air to flow in the direction from the channel 3 to the vacuum source 6 only, and not in the reversed direction.

A branch 8 from the pipe 5 reaches the vacuum reservoir 9.

The channel 4 of the solenoid valve 1 communicates with the chamber 10 of the servo friction-clutch cylinder. Said chamber 10 is separated from the chamber 11 by a movable membrane 12 which is integral with the shaft 13 connecting said membrane 12 through the connector 14 to the cord 15 running inside the sheathing 16, said cord 15 being connected to the spherical joint 17 that allows the friction-clutch pedal (or its equivalent leverage) to be pulled.

When the solenoid valve 1 is energized, the membrane 12 is pushed toward the bottom wall of the chamber 10 as a result of the vacuum so generated.

Indeed, said chamber 10 becomes evacuated whereas the atmospheric pressure will be present within chamber 11 because of the air flowing in through the non-return valve 18.

That phase is now considered, the friction-clutch being disengaged and the motor vehicle being at a stop.

The engagement phase of the clutch starts when a pressure is exerted on the accelerator or gas pedal, which pedal, in addition to making the carburetor throttle to rotate, also opens the electrical contact 19 (Figures 1a and 1b) which is present on the pedal itself.

Said electrical contact 19 causes the solenoid valve 1 to commutate from the position shown in Figure 5 to the position of Figure 4, so that the duct 3 is closed whereas the conduct 2 is opened again, said conduct causing the chamber 10 to communicate with the atmosphere. The action of the springs 20 pushes the membrane 12 toward the chamber 11, so that the air volume contained within the space 11 becomes compressed because air can not be vented through the check-valve 18 or through the vent piston 22.

The small piston 22 slides within the cylinder 21 and obstructs the passage 23.

The return of the membrane 11 and consequently of the small cylinder 13 is prevented under such conditions from occurring so that also the pedal (or the equivalent leverage) of the clutch will be stopped in its stroke.

If the speeding up action is continued, a further opening will occur of the carburetor throttle as well as the consequent displacement of the small lever 24 which is rigidly connected to said throttle. The cable 25 is connected to said small lever 24, said cable 25 being in turn rigidly connected to the small piston (venting outlet closing means) 22 so that the displacement of the lever 24 will cause it to move away from the venting outlet 23, sliding within the cylinder 21.

According to this embodiment of the device of the present invention, said small piston 22 and said cylinder 21 are connected to the cable 25 and, through the plate 26 rigidly to the shaft 13, and through the plate 26' rigidly to the cable 15.

The air within the chamber 11, being vented out the opening 23, allows the membrane 12 and consequently the shaft 13, the cable 15 and the friction-clutch pedal to be displaced, so that the friction disk will further approach to the engine flywheel.

The translatory motion of the clutch pedal system 13–17, 26, 26' following the motion of the cable 25 and the venting outlet closing means 22, will cause the venting outlet 23 to be closed again and consequently the membrane 12 to stop. All that is permanently repeated as long as the depression of the gas pedal is being increased, so that the driver can proportion the slipping of the friction at his will in relation to the load conditions of the motor vehicle and to the number of revolutions of the engine.

When the impact slipping phase of the friction-clutch is over, the motor vehicle starts riding.

Each time the gas pedal is released, till the vehicle has not reached the predetermined value of the speed of 15 Km/hr (about 10 mph) the electrical contact 19 closed because of the action of the spring 27 which is present below the gas pedal (Figure 1a).

When, on the contrary, the speed of 15 Km/hr (about 10 mph) is surpassed, an electronic device (not shown) starts operating, which device exploits the pulses from a frequency generator 28 (Figure 1c) applied on the tachometer cord, said tachometer being pointed out by number 29. Said electronic device cuts the gas pedal contact 19 out, so that the friction-clutch is prevented from disengaging each time said gas pedal is released, and then the compression slowing down of the vehicle is kept when the speed of the vehicle decreases, said device also causing, after an electronic contact (not shown) provided for instance on the gear lever has been acted upon, said electronic contact so acted upon having determined the disengagement of the friction-clutch, the opening of the venting valve 30 and consequently the air within chamber 11 to flow out of the same so that the quick re-engagement of the friction-clutch is made possible during the shifting when the motor vehicle is riding. Each time said vehicle is slowed down till reaching a speed slower than 15 Km/hr (about 10 mph) the intervention of said electronic device will not occur. Figure 2 illustrates a second embodiment of the device according to the present invention. It can be observed that chamber 11 operates with a free air flow, as no sealing or air-tight member is provided on the shaft 13. According to this kind of embodiment, the channel 2 of the solenoid valve 1, instead of being direct connected to the air intake, is connected through the pipe 31 with the venting piston 22, the one-way valve 30 being previously interposed.

By means of such arrangement, when the vehicle is set going or anyway when its speed is lower than 15 Km/hr (about 10 mph), the venting will occur from said small piston 22, whereas when the speed of the vehicle is faster than that value, such venting will occur as previously through said valve 30.

Figure 3 illustrates a third embodiment of the present invention wherein said chamber 11 also operates with a free air circulation as in the preceeding case, but the rigid connection between the shaft 13 and the venting outlet closing means 22 is obtained in this instance through an extension shaft 32 from the membrane 12 through the chamber 10 and by a shaped lever 33 hinged at 34, and not through the plate 26 which was employed in the previous case. Indeed, in the present case the small venting outlet closing means 22 is provided behind said chamber 10 and not on the side of chamber 11.

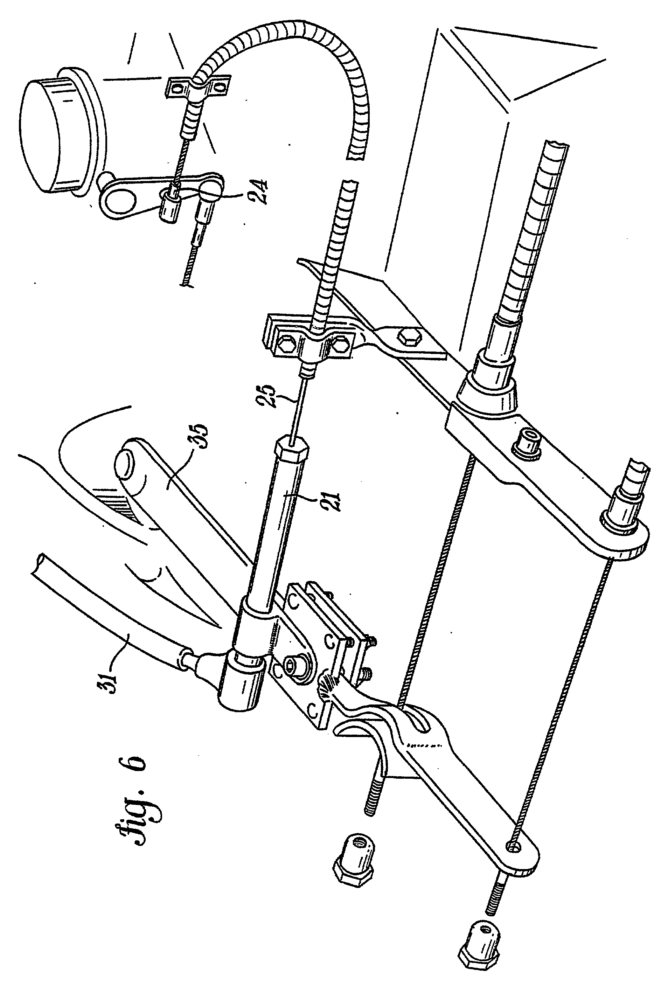

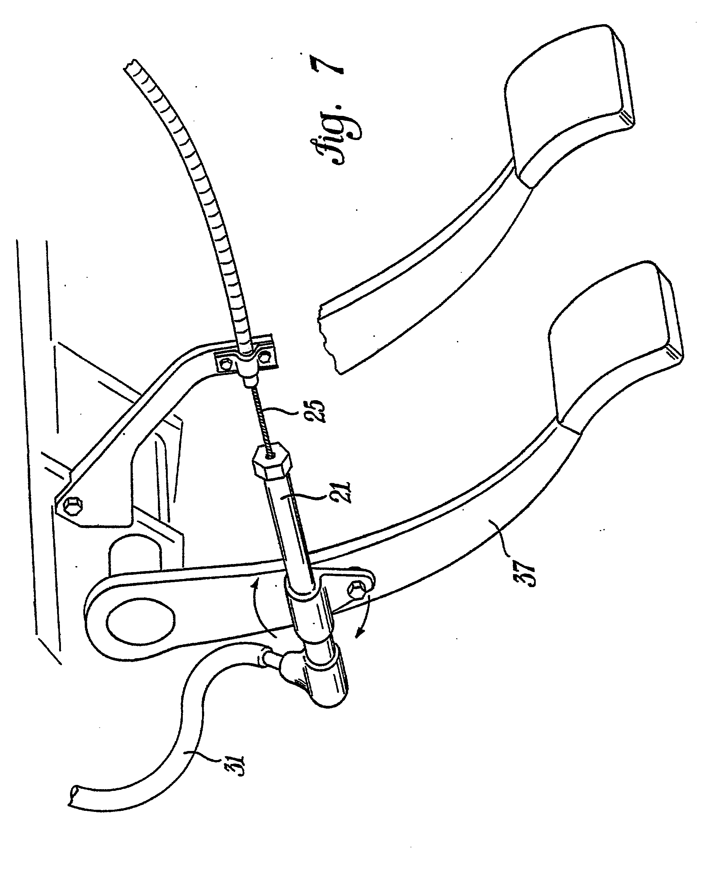

As shown schematically in Figures 6 and 7, the cylinder 21 can be provided indifferently either on the friction-clutch lever system 35 (Figure 6) or on the friction-clutch pedal 37 (Figure 7), or also in other positions which could be considered as advantageous, instead of being connected through said plates 26 and 26' to said extension shaft 32, or to the shaft 13.

## Claims

1. A servo friction-clutch device for automatic friction-clutch operation in vehicles of any kind, said device comprising air-tight cylinder means having two chambers (10, 11) being separated by a sliding membrane means (12) connected through shaft means (13) air-tightly slidable through one of said chambers and by mechanical connection means (14–17) to the friction-clutch pedal (37) or to its equivalent lever system and multi-way valve means (1) one (4) of its ways being connected to said cylinder means, another way (2) being in direct communication with the atmospheric pressure, while a third way (3) communicates with vacuum generating means (6), said multi-way valve means (1) is shifted in response of a release or depression of the acceleration means (at 19, 27) of the vehicle either to provide disengagement of the clutch by connecting the one (10) of said chambers with the vacuum generating means (6) or to initiate engagement of the clutch by connecting said one (10) of said chambers with the atmospheric pressure; said device further comprising venting means (21–23) provided at the other (11) of said chambers, characterized in that, said multi-way valve means (1) is a three-way solenoid valve; said venting means (21–23) includes a venting outlet closing means (22) and a venting outlet means (21, 23) connected to a carburetor (lever 24) and directly or indirectly to the friction clutch pedal (37) or its mechanical connection means (13–16), respectively; and a frequency generator means (28) being responsive to the vehicle speed for operating a one-way solenoid valve (30) active to vent said other (11) of the chambers for quick re-engagement of the clutch during a gear shift.

2. A servo friction-clutch device for automatic friction-clutch operation in vehicles of any kind, said device comprising air-tight cylinder means having a sliding membrane means (12) being connected through shaft means (13) and mechanical connection means (14–17) to the friction-clutch pedal (37) or to its equivalent lever system; and multi-way valve means (1) one (4) of its ways being in communication with a chamber (10) of said cylinder means (10, 11) another way (3) being in communication with vacuum generating means (6) while a third way (2) is arranged to vent the cylinder means (10, 11), said multi-way valve means (1) is shifted in response to a release or depression of the acceleration means (at 19, 27) of the vehicle either to provide disengagement of the clutch by connecting said chamber (10) with the vacuum generating means (6) or to initiate engagement of the clutch by connecting said chamber (10) with the atmospheric pressure; characterized in that, said multi-way valve means (1) is a three-way solenoid valve; said third way (2) of said three-way solenoid valve (1) communicates with venting means (21–23) for a single tight chamber (10) of the cylinder means, said venting means (21–23) includes a venting outlet closing means (22) and a venting outlet means (21, 23) connected to a carburetor (lever 24) and directly or indirectly to the friction clutch pedal (37) or its mechanical connection means (13–16), respectively; and a one-way venting solenoid valve means (30) is arranged between said three-way solenoid valve means (1) and said venting means (21–23) and operated by a frequency generator means to vent said single chamber (10) independently from said venting means (21–23).

3. A servo friction-clutch device according to claims 1 or 2, characterized in that said venting means (21–23) comprises a tight piston (22) cooperating with a venting outlet (23) and connected on the other side operatively to the carburetor (at 24) of the vehicle.

4. A servo friction-clutch device according to claims 1 or 2 and 3, characterized in that said venting means (21–23) are actuated by the throttle of said carburetor through small lever means which are connected to said throttle and which are linked by wire means (25) to said venting means.

5. A servo friction-clutch device according to claims 1 or 2 and 3, characterized in that said venting means (21–23) are actuated by the vacuum within the carburetor, which vacuum through a small hole that is preferentially arranged at the upper part with respect to the valve of the carburetor itself, acts on a movable small piston provided inside a membrane, said piston being in turn connected to said venting means.

6. A servo friction-clutch device according to anyone of the preceding claims, characterized in that said mechanical connection means (13–16) for connecting said membrane means (12) and said shaft means (13) to the clutch pedal are made up of a connector and a cord which can slide inside a sheathing (16) and is connected to a ball-and-socket joint (17).

7. A servo friction-clutch device according to anyone of the preceding claims, characterized in that said vacuum generating means (6) are made up of the manifold of the engine of said vehicle, a check-valve (7) being provided on the duct (5) connecting said manifold to said solenoid valve means (1), said check-valve (7) allowing the flow to pass in the direction from the solenoid valve means to the manifold only.

8. A servo friction-clutch device according to claim 7, characterized in that a vacuum reservoir (9) is provided as a bypass or offtake across said duct (5).

9. A servo friction-clutch device according to claims 1 or 2, characterized in that said venting outlet means (21, 23) are connected to said shaft means (13) and to said mechanical means through plate means (26).

10. A servo friction-clutch device according to claim 2, wherein said venting outlet means are connected to said shaft means (13) through an extension shaft and through shaped-lever means.

11. A servo friction-clutch device according to claims 1 or 2, wherein said venting outlet means (21, 23) are provided direct on the friction-clutch pedal (37) or on its equivalent lever system.

12. A servo friction-clutch device according to anyone of the preceding claims, characterized in that said three-way solenoid valve means (1) are commuted by means of an electrical contact (19) provided below the gas pedal of the motor vehicle.

13. A servo friction-clutch device according to claims 1–12, characterized in that said frequency generator means (28) are connected to the tachometer (29) of the vehicle so as to cause the operation of said one-way venting solenoid valve means (30) at a predetermined speed only.

**Patentansprüche**

1. Servo-Reibungskupplungsvorrichtung zum Automatisieren der Kupplungswirkung bei Fahrzeugen jeder Art, wobei ein luftdichter Zylinder mit zwei Kammern (10, 11) vorgesehen ist, welche durch eine verschiebbare Membrane (12) getrennt sind, die über eine, durch eine der genannten Kammer verschiebbare Stange (13) und über mechanische Verbindungselemente (14–17) mit einem Kupplungspedal (37) oder mit einem equivalenten Hebelsystem luftdicht verbunden ist; ein Weg (4) eines Vielweg-Magnetventils (4) mit dem genannten Zylinder, der andere Weg (2) mit Atmosphärendruck und ein dritter weg (3) mit Vakuum erzeugenden Mitteln (6) in Verbindung steht; wobei das genannte Vielweg-Magnetventil (1) in Abhängigkeit von Freigabe oder Unterdruck der Beschleunigungsmittel (19, 27) des Fahrzeuges umgeschaltet wird, um die Kupplung durch Verbindung einer (10) der genannten Kammer mit den Vakuum erzeugenden Mitteln (6) auszuschalten oder durch Verbindung eines (10) der genannten Kammer mit Atmosphärendruck die Einschaltung der Kupplung zu beginnen und wobei Belüftungsmittel (21–23) an der anderen (11) der genannten Kammer vorgesehen sind, dadurch gekennzeichnet, daß das genannte Multiweg-Ventil (1) ein Dreiweg-Solenoidventil ist; die genannten Belüftungsmittel (21–23) mit einem Belüftungsauslauf (21–23) und mit Drosselungsmitteln (22) für den Belüftungsauslauf versehen sind, der mit einem Vergaser (Hebel 24) und unmittelbar oder mittelbar mit dem Kupplungspedal (37) beziehungsweise mit seinen mechanischen Verbindungsmitteln (13–16) verbunden ist, wobei ein Frequenzgenerator (28) auf die Fahrzeuggeschwindigkeit anspricht, um ein Einweg-Solenoidventil (30) zu betätigen, das die andere (11) der genannten Kammer belüftet, um während einer Schaltung die Kupplungsvorrichtung schnell wieder einzuschalten

2. Servo-Reibungskupplungsvorrichtung zum Automatisieren der Kupplungswirkung bei Fahrzeugen jeder Art, die einen luftdichten, mit einer verschiebbaren Membrane (12) versehenen Zylinder aufweist, wobei diese Membrane über eine Stange (13) und mechanische Verbindungsmittel (14–17) mit dem Kupplungspedal (3) oder mit equivalentem Hebelsystem verbunden ist und wobei ein Weg (4) eines Multiwegventils (1) mit einer Kammer (10) des genannten Zylinders, und der andere Weg (13) mit Vakuum erzeugenden Mitteln in Verbindung steht, während ein dritter Weg (2) zur Belüftung des Zylinders (10, 11) vorgesehen ist, wobei das genannte Multiwegventil (1) auf Freigabe oder Unterdruck der Beschleunigungsmittel (19, 27) des Fahrzeuges anspricht, um entweder die Kupplung durch Verbindung der genannten Kammer (10) mit den Vakuum erzeugenden Mitteln (6) auszuschalten oder durch die Verbindung der genannten Kammer (10) mit Atmosphärendruck die Kupplung wieder einzuschalten, dadurch gekennzeichnet, daß das genannte Multiwegventil (1) ein Dreiweg-Solenoidventil ist; der genannte dritte Weg (2) des genannten Dreiweg-Solenoidventils mit Belüftungsmitteln (21–23) für eine Dichtkammer (10) des Zylinders in Verbindung steht; die genannten Belüftungsmittel (21–23) Drosselungsmittel für Belüftungsausstiftmittel (21–23) aufweisen, die mit einem Vergaser (Hebel 24) und mittelbar oder unmittelbar mit dem Kupplungspedal (37), oder mit seinen mechanischen Verbindungsmitteln (13–16) verbunden sind; und daß ein Einweg-Belüftung-Solenoidventil (30) zwischen dem genannten Dreiweg-Solenoidventil (1) und den genannten Belüftungsmitteln (21, 23) angeordnet ist und durch Frequenz erzeugende Mittel betätigt wird, um die einzelne Kammer (10) unabhängig von den genannten Belüftungsmitteln (21–23) zu belüften.

3. Servo-Reibungskupplungsvorrichtung gemäß dem Anspruch 1 oder 2, dadurch gekennzeichnet, daß die genannten Belüftungsmittel (21–23) einen mit einem Belüftungsauslauf (23) mitarbeitenden und am anderen Ende mit dem Vergaser (24) des Fahrzeugs verbundenen Kolben (22) aufweisen.

4. Servo-Reibungskupplungsvorrichtung gemäß dem Anspruch 1 oder 2 und 3, dadurch gekennzeichnet, daß die genannten Belüftungsmittel (21–23) durch die Drosselklappe des genannten Vergasers über einen kleinen Hebel betätigt werden, der mit der Drosselklappe verbunden und über einen Draht (25) an die genannten Belüftungsmittel angelenkt ist.

5. Servo-Reibungskupplungsvorrichtung nach Anspruch 1, 2 oder 3, dadurch gekennzeichnet, daß die Belüftungsmittel (21–23) durch das Vakuum im Vergaser betätigt werden, welches über ein kleines Loch, das vorzugsweise im oberen Abschnitt des Vergasers bezogen auf das Vergaserventil angeordnet ist, auf einen beweglichen kleinen, in einer Membran angeordneten Kolben wirkt, welcher mit den Belüftungsmitteln verbunden ist.

6. Servo-Reibungskupplungsvorrichtung nach einem der vorangehenden Ansprüche, dadurch gekennzeichnet, daß die mechanischen Mittel (13–16) zur Verbindung der Membran (12) und der Stange (13) mit dem Kupplungspedal von einem Verbindungselement und einer Schnur gebildet werden, die in einer Hülle (16) verschiebbar ist und mit einem Kugelgelenk (17) verbunden ist.

7. Servo-Reibungskupplungsvorrichtung nach einem der vorangehenden Ansprüche, dadurch gekennzeichnet, daß die Vakuum erzeugenden Mittel (6) vom Ansauger des Motors des Fahrzeuges gebildet werden, wobei ein Rückschlagventil (7) in der den Ansauger mit dem Magnetventil (1) verbindenden Leitung (5) angeordnet ist, das einen Durchfluß nur in der Richtung vom Magnetventil zum Ansauger ermöglicht.

8. Servo-Reibungskupplungsvorrichtung nach Anspruch 7, dadurch gekennzeichnet, daß ein Vakuumbehälter (9) als Bypass oder Abzweigung aus dieser Leitung (5) vorgesehen ist.

9. Servo-Reibungskupplungsvorrichtung nach Anspruch 1 oder 2, dadurch gekennzeichnet, daß die Belüftungsmittel (21, 23) mit der Stange (13) und den mechanischen Mitteln über Platten (26) verbunden sind.

10. Servo-Reibungskupplungsvorrichtung nach Anspruch 2, wobei die Belüftungs-Auslaßmittel mit der Stange (13) über eine Verlängerungsstange und geformte Hebelelemente verbunden sind.

11. Servo-Reibungskupplungsvorrichtung nach Anspruch 1 oder 2, wobei die Belüftungs-Auslaßmittel direkt am Kupplungspedal (37) oder dem entsprechenden Hebelsystem angeordnet sind.

12. Servo-Reibungskupplungsvorrichtung nach einem der vorangehenden Ansprüche, dadurch gekennzeichnet, daß das Dreiweg-Magnetventil (1) mit Hilfe eines unterhalb des Gaspedales des Motorfahrzeuges angeordneten elektrischen Kontaktes (19) umgeschaltet wird.

13. Servo-Reibungskupplungsvorrichtung nach Anspruch 1 bis 12, dadurch gekennzeichnet, daß der Frequenzgenerator (28) mit dem Tachometer (29) des Fahrzeuges derart verbunden ist, daß die Betätigung des Einweg-Belüftungs-Magnetventils (30) nur bei einer vorbestimmten Geschwindigkeit erfolgt.

**Revendications**

1. Dispositif de servo-embrayage à friction pour le fonctionnement automatique d'un embrayage à friction dans des véhicules de tout type, ce dispositif comprenant un cylindre étanche à l'air ayant deux chambres (10, 11) séparées par une membrane coulissante (12) qui est reliée, par un arbre (13) coulissant de façon étanche à l'air à travers l'une desdites chambres et par des moyens de connexion mécaniques (14–17), à la pédale (37) de l'embrayage à friction ou à son mécanisme à levier équivalent, et une vanne (1) à plusieurs voies, l'une (4) de ses voies raccordée audit cylindre, une autre voie (2) communiquant directement avec la pression atmosphérique, tandis qu'une troisième voie (3) communique avec des moyens de production de vide (16), ladite vanne à plusieurs voies (1) étant commutée en réponse à un relâchement ou à une pression des moyens d'accélération (à 19, 27) du véhicule ou pour procurer le désengagement de l'embrayage à friction par la connexion de l'une (10) desdites chambres aux moyens de production de vide (6), ou pour commencer l'engagement de l'embrayage à friction par la connexion de ladite chambre (10) à la pression atmosphérique; ledit dispositif comprenant aussi des moyens de purge à l'atmosphère (21–23) raccordés à l'autre (11) desdites chambres, caractérisé en ce que ladite vanne (1) à plusieurs voies est une électrovanne à trois voies; lesdits moyens de purge à l'atmosphère (21–23) incluent un moyen de fermeture (22) de la sortie de purge et une sortie de purge (21, 23) reliée à un carburateur (levier 24) et directement ou indirectement à la pédale (37) de l'embrayage à friction ou à ses moyens de connexion mécaniques (13, 16), respectivement; et des moyens de génération de fréquence (28) qui répondent à la vitesse du véhicule pour actionner une électrovanne (30) à une voie active pour purger à l'atmosphère l'autre (11) desdites chambres pour le réengagement rapide de l'embrayage à friction pendant un changement de vitesse.

2. Dispositif de servo-embrayage à friction pour le fonctionnement automatique d'un embrayage à friction dans des véhicules de tout type, ce dispositif comprenant un cylindre étanche à l'air ayant une membrane coulissante (12) reliée, par un arbre (13) et par des moyens de connexion mécaniques (14–17) à la pédale (37) de l'embrayage à friction ou à son mécanisme à levier équivalent; et une vanne (1) à plusieurs voies, l'une (4) de ses voies étant raccordée à une chambre (10) dudit cylindre (10, 11), une autre voie (3) communiquant avec des moyens de productions de vide (6), tandis qu'une troisième voie (2) est prévue pour la purge à l'atmosphère dudit cylindre (10, 11), ladite vanne (1) à plusieurs voies est commutée en réponse à un relâchement ou à une pression des moyens d'accélération (à 19, 27) du véhicule ou pour procurer le désengagement de l'embrayage à friction par la connexion de ladite chambre (10) aux moyens de production de vide (6), ou pour commencer l'engagement de l'embrayage à friction par la connexion de ladite chambre (10) à la pression atmosphérique; caractérisé en ce que la dite vanne (1) à plusieurs voies est une électrovanne à trois voies; ladite troisième voie (2) de ladite électrovanne (1) à trois voies est raccordée à des moyens de purge à l'atmosphère (21–23) pour l'une (10) des chambres, étanche, dudit cylindre, lesdits moyens de purge à atmosphère (21–23) incluent un moyen de fermeture (22) de la sortie de purge et une sortie de purge (21, 23) reliée à un carburateur (levier 24) et directement ou indirectement à la pédale (37) de l'embrayage, à friction ou à ses moyens de connexion mécaniques (13–16) respectivement, et une électrovanne (30) de purge à l'atmosphère à une voie est prévue entre ladite électrovanne (1) à trois voies et lesdits moyens de purge à l'atmosphère (21–23) et est actionnée par des moyens de génération de fréquence (28) pour purger ladite chambre (10) indépendamment desdits moyens de purge (21–23).

3. Dispositif de servo-embrayage à friction suivant la revendication 1 ou 2, caractérisé en ce que lesdits moyens de purge (21–23) comprennent un piston (22) étanche associé à une sortie de purge à l'atmosphère (23) et relié de l'autre côté fonctionnellement au carburateur (à 24) du véhicule.

4. Dispositif de servo-embrayage à friction suivant les revendications 1 ou 2 et 3, caractérisé en ce que lesdits moyens de purge (21–23) sont actionnés par le volet du carburateur, par l'intermédiaire d'un petit levier qui est accouplé audit volet et qui est relié par un câble (25) auxdits moyens de purge.

5. Dispositif de servo-embrayage à friction suivant les revendications 1 ou 2 et 3, caractérisé en ce que lesdits moyens de purge (21–23) sont actionnés par la dépression à l'intérieur du carburateur, cette dépression agissant, par l'intermédiaire d'un petit trou qui est de préférence prévu à la partie supérieure par rapport au clapet du carburateur lui-même, sur un petit piston mobile prévu à l'intérieur d'une enveloppe, ce piston étant lui-même relié aux moyens de purge.

6. Dispositif de servo-embrayage à friction suivant l'une quelconque des revendications précédentes, caractérisé en ce que lesdits moyens de connexion mécaniques (13–16) pour la liaison de ladite membrane (12) et dudit arbre (13) à la pédale d'embrayage sont constitués d'un connecteur et d'un câble qui peut coulisser à l'intérieur d'une gaine (16) et qui est raccordé à une articulation à rotule (17).

7. Dispositif de servo-embrayage à friction suivant l'une quelconque des revendications précédentes, caractérisé en ce que lesdits moyens de production de vide (6) sont constitués par la tubulure du moteur du véhicule, un clapet (7) unidirectionnel étant prévu sur le conduit (5) reliant ladite tubulure à ladite électrovanne (1), ce clapet (7) permettant l'écoulement dans la direction de l'électrovanne vers la tubulure seulement.

8. Dispositif de servo-embrayage à friction suivant la revendication 7, caractérisé en ce qu'un réservoir (9) de vide est prévu en contournement ou en dérivation sur ledit conduit (5).

9. Dispositif de servo-embrayage à friction suivant la revendication 1 ou 2, caractérisé en ce que ladite sortie de purge (21, 23) à l'atmosphère est reliée audit arbre (13) et auxdits moyens mécaniques par des plaques (26).

10. Dispositif de servo-embrayage à friction suivant la revendication 2, dans lequel la sortie de purge est reliée audit arbre (13) par une extension d'arbre et par des moyens à levier.

11. Dispositif de servo-embrayage à friction suivant la revendication 1 ou 2, dans lequel ladite sortie de purge (21, 23) est prévue directement sur la pédale (37) d'embrayage à friction ou sur son mécanisme à levier équivalent.

12. Dispositif de servo-embrayage à friction suivant l'une quelconque des revendications précédentes, caractérisé en ce que ladite électrovanne (1) à trois voies est commutée au moyen d'un contact électrique (19) prévu sous la pédale d'accélération du véhicule à moteur.

13. Dispositif de servo-embrayage à friction suivant les revendications 1 à 12, caractérisé en ce que ledit générateur de fréquence (28) est relié au tachymètre (29) du véhicule de façon à provoquer le fonctionnement de ladite électrovanne (30) de purge à une voie à vitesse prédéterminée seulement.

fig. 1

*Fig. 1a*   *Fig. 1b*

*Fig. 1c*

fig. 2

Fig. 3

EP 0 193 502 B1

11 10

1

12 2

4

13 20

20

3

5 6

*fig. 4*

EP 0 193 502 B1

Fig. 5

*Fig. 6*

31

35

21

25

24

EP 0 193 502 B1

31

21

25

37

*Fig. 7*

EP 0 193 502 B1